Europäisches Patentamt

European Patent Office

Office européen des brevets

(19)

(11) Numéro de publication: **0 118 379**
**B1**

(12) **FASCICULE DE BREVET EUROPEEN**

(45) Date de publication du fascicule du brevet: **31.08.88**

(51) Int. Cl.⁴: **B 01 F 17/00**

(21) Numéro de dépôt: **84420036.0**

(22) Date de dépôt: **02.03.84**

(54) Micro-émulsions à haute viscosité.

(30) Priorité: **07.03.83 US 473078**

(43) Date de publication de la demande:
**12.09.84 Bulletin 84/37**

(45) Mention de la délivrance du brevet:
**31.08.88 Bulletin 88/35**

(84) Etats contractants désignés:
**AT BE CH DE FR GB IT LI LU NL SE**

(56) Documents cités:
**FR-A-2 119 274**
**US-A-4 146 499**

(73) Titulaire: **Rosano, Henri L.**
**848 Woodland Avenue**
**Oradell New Jersey (US)**

(72) Inventeur: **Rosano, Henri L.**
**848 Woodland Avenue**
**Oradell New Jersey (US)**

(74) Mandataire: **Maureau, Philippe**
**Cabinet Germain & Maureau Le Britannia - Tour**
**C 20, bld Eugène Déruelle Boîte Postale 3011**
**F-69392 Lyon Cédex 03 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Description

La présente invention concerne les micro-émulsions et plus particulièrement les micro-émulsions visqueuses d'huile dans l'eau.

Il est connu de réaliser des micro-émulsions dans lesquelles l'eau ou différents liquides essentiellement aqueux sont dispersés dans une phase d'huile. Les micro-émulsions auxquelles il est fait référence concernent une dispersion dans laquelle les gouttelettes dispersées sont de dimensions sensiblement colloïdales, c'est-à-dire ont un diamètre inférieur à 0,5 μm, et ont généralement un diamètre compris entre 0,005 μm et 0,1 μm. De façon caractéristique, ces micro-émulsions peuvent être reconnues et distinguées des émulsions traditionnelles en ce qu'elles sont plus stables et généralement à peu près transparentes.

C'est avec des succès limités que sont habituellement préparées les micro-émulsions comprenant, essentiellement, une phase lipophile dispersée dans de l'eau. Un tel exemple d'une micro-émulsion d'huile dans l'eau ayant un équilibre hydrophile-lipophile proche de celui de l'agent tensio-actif de base est décrit dans le brevet US 3 778 381. Ce brevet révèle la préparation d'une micro-émulsion de certains composés organiques flourés dispersés dans une phase aqueuse.

Un procédé plus général de préparation de micro-émulsions d'huile dans l'eau est décrit dans le brevet US 4 146 499. Comme décrit dans ce brevet, de telles émulsions peuvent être préparées selon un procédé dans lequel l'huile à partir de laquelle est réalisée la phase dispersée est placée dans de l'eau avec une quantité suffisante d'agent tensio-actif de base. Parmi les agents tensio-actifs de base mentionnés dans ce brevet, il y a des composés caractérisés par une partie lipophile dont une extrémité est chargée par une partie hydrophile. Des exemples de tels agents actifs de surface connus sont les carboxylates, les sulfates et les sulfonates de corps gras de même que les oxydes d'amines gras. Le mélange d'huile, d'eau et d'agent tensio-actif de base est ensuite agité pour produire une émulsion lactescente d'huile dispersée dans l'eau. Un second agent tensio-actif ou "co-agent" est ajouté ayant un équilibre hydrophile-lipophile proche de celui de l'agent tensio-actif principal (particulièrement l'alcool amylique ou hexylique) dans des proportions suffisantes pour clarifier l'émulsion lactescente et former la micro-émulsion.

La théorie de formation d'une émulsion d'huile dans l'eau peut être expliquée de la façon suivante:

La quantité d'agent tensio-actif de base qui est employée est suffisante pour que, une fois que la micro-émulsion est à peu près formée, la totalité de l'agent tensio-actif soit adsorbée à la surface des gouttelettes formant la micro-émulsion, la partie lipophile de l'agent tensio-actif étant dirigée vers l'intérieur de la gouttelette d'huile et la partie hydrophile de l'agent tensio-actif couvrant la surface de la gouttelette et se trouvant en contact avec la phase aqueuse. Des calculs effectués à partir des mesures de la taille des gouttelettes individuelles formant la micro-émulsion, la taille moléculaire de l'agent tensio-actif de base et les proportions relatives d'agent tensio-actif de base et de la phase huileuse ont montré que la surface des gouttelettes individuelles formant la micro-émulsion est à peu près entièrement couverte par l'agent tensio-actif de base adsorbé, et que très peu, voire pas du tout d'agent tensio-actif de base, se trouvera dissous soit dans la phase huileuse, soit dans la phase aqueuse. Une augmentation de la quantité de l'agent tensio-actif de base se traduira par une diminution de la taille des gouttelettes qui formeront la phase dispersée de la micro-émulsion. Une diminution des proportions de l'agent tensio-actif de base se traduira dans la micro-émulsion par des gouttelettes plus importantes dans la phase dispersée.

Les conditions thermo-dynamiques que l'on rencontre lors d'un simple mélange d'huile, d'eau et d'agent tensio-actif de base ne favorisent pas la formation d'une micro-émulsion, ayant une large surface d'échange. Ces conditions peuvent être apportées par l'agent tensio-actif dit "co-agent" qui produit une très faible tension interfaciale transitoire et permet de ce fait la formation d'une micro-émulsion. Toutefois, ceci est suivi par une tension interfaciale positive finale qui forme des gouttelettes sphériques. La micro-émulsion d'huile dans l'eau une fois formée, il est essentiel d'obtenir une émulsion transparente de haute stabilité.

Les micro-émulsions obtenues de la façon indiquée précédemment présentent une viscosité relativement faible. La viscosité de l'émulsion est généralement proche de la viscosité de la phase aqueuse dans laquelle les gouttelettes d'huile sont dispersées. Dans un certain nombre d'applications qui seront explicitées plus loin, il est important de disposer d'une micro-émulsion d'huile dans l'eau de viscosité améliorée. Dans certains cas, la viscosité de la micro-émulsion de base comprise entre 1 et 100 mPa.s peut être augmentée de 10 à 100 fois.

Dans d'autres cas, il peut être souhaité d'augmenter suffisamment la viscosité, de telle sorte que la micro-émulsion soit essentiellement un gel.

La micro-émulsion selon l'invention comprend:

1) une phase aqueuse continue,

2) une phase huileuse non miscible avec la phase aqueuse dans laquelle elle est dispersée,

3) un agent tensio-actif de base, qui est un composé ayant une partie lipophile et une partie chargée hydrophile, dont la fonction est de disperser la phase huileuse en fines gouttelettes de moins de 0,5 μm,

4) un co-agent tensio-actif ayant un équilibre hydrophile/lipophile supérieur à l'agent tensio-actif de base, dont la fonction est de former une dispersion limpide, et

5) un agent tensio-actif secondaire à longue chaîne ayant une partie lipophile et dont la fonction est d'augmenter la viscosité de la micro-émulsion, l'agent tensio-actif secondaire possè- dant une partie lipophile à chaîne longue ayant au moins 8 atomes de carbone, et une partie chargée hydrophile apte à réagir avec la partie chargée hydrophile de l'agent tensio-actif de base.

Des agents tensio-actifs secondaires types sont ceux dont la partie lipophile est un groupe aliphatique à chaîne longue d'au moins 8 atomes de carbone. D'autres agents tensio-actifs convenables sont les composés possèdant des cycles aryle, c'est-à-dire les composés alkylaryle ayant des maillons à fonction similaire. Les liaisons éther peuvent aussi être présentes, telles que dans les sulfates d'alcanol-oxyde d'éthylène. D'autres agents tensio-actifs similaires sont connus des spécialistes de la chimie des composés tensio-actifs, qui peuvent être utilisés dans la présente invention. La longueur de chaîne maximale de l'agent tensio-actif secondaire dépend de la nature du groupe hydrophile et est liée au critère selon lequel l'équilibre lipophile-hydrophile de l'agent tensio-actif est tel que celui-ci soit distribué entre les phases aqueuse et huileuse. Si l'agent tensio-actif secondaire est caractérisé par une partie à longue chaîne aliphatique ou aryl-aliphatique, il contiendra, de façon caractéristique, de 8 à 24 atomes de carbone. Si la partie lipophile contient des liaisons éthers tel qu'un condensat d'oxyde d'éthylène ou d'oxyde de propylène, la partie lipophile peut être plus longue.

Quoique la présente invention ne doive pas être limitée à une théorie particulière, il est vraisemblable que l'agent tensio-actif secondaire réalise une augmentation de la viscosité de la micro-émulsion du fait qu'il réagit avec la partie chargée de l'agent tensio-actif de base sur la surface des gouttelettes formant la micro-émulsion, avec la "terminaison" lipophile de l'agent tensio-actif secondaire s'étendant vers l'extérieur de la surface des gouttelettes. Chaque gouttelette peut donc être schématisée comme ayant une forme d'oursin. Un empêchement stérique est ainsi créé entre les gouttelettes adjacentes de la microémulsion. Cette conclusion est supportée par des calculs théoriques reposant notamment sur la longueur de chaîne de l'agent tensio-actif secondaire et sur la distance entre gouttelettes de la micro-émulsion. Lorsque les longueurs de chaîne de l'agent tensio-actif secondaire sont suffisamment longues relativement à la distance entre gouttelettes pour créer un empêchement stérique conséquent, des augmentations plus importantes de la viscosité de la micro-émulsion sont observées.

En ce qui concerne la mise en oeuvre de la présente invention, l'ordre d'introduction des différents composants est important. Sachant que les agents tensio-actifs de base et secondaires réagissent l'un avec l'autre, si ces deux agents sont ajoutés simultanément à l'émulsion d'huile et d'eau, avant la formation de la micro-émulsion, on n'observera qu'un faible effet sur la viscosité, et en fait dans ces circonstances, il peut même être impossible de former la micro-émulsion, du fait que les agents tensio-actifs de base et secondaire pourront se neutraliser. De ce fait, conformément à la présente invention, la micro-émulsion doit tout d'abord être formée, comme indiqué dans le brevet US—4 146 499, après quoi l'agent tensio-actif secondaire est ajouté.

Les produits nécessaires pour réaliser la micro-émulsion d'huile dans l'eau peuvent être ceux décrits dans le brevet US—4 146 499.

Les substances lipophiles comprennent les solvants, tels que des huiles minérales légères ou du toluène, des mélanges de ceux-ci avec de la lanoline, des fluoro-carbones, des silicones tels que le diméthyl-siloxane, des cires naturelles, des cires synthétiques (telles que cires de polyéthylène), et des produits de conditionnement pour tissus et cheveux. Des micro-émulsions peuvent également contenir divers produits annexes, tels que ceux employés dans les shampooings, les crèmes de rasage et d'autres produits cosmétiques. D'autres produits encore peuvent être utilisés, tels que des graisses comestibles, des cires ou des huiles, telles que des mono, di et triglycérides qui sont insolubles ou non miscibles à l'eau. La phase aqueuse peut, outre de l'eau, contenir un certain nombre de substances solubles dans l'eau, telles que par exemple de l'hypochlorite de sodium, de l'eau oxygénée et des sels solubles dans l'eau. L'une, ou chacune des phases aqueuses ou huileuses peuvent comprendre un mélange de produits actifs adaptés à l'application pour laquelle la micro-émulsion est destinée.

Des exemples de produits qui peuvent être solubles dans la phase aqueuse et qui peuvent être, de ce fait, avantageusement appliqués dans le cas de la présente invention, sont les suivants:

1) des produits anti-microbiens, tels que palmitates de chloramphénicol et stéarate d'érythromicine,

2) des anesthésiques, tels que halothane, lido-caïne, tétracaïne et butacaïne,

3) des huiles aromatiques, telles que de l'eucalyptol,

4) des stéroïdes et des hormones, telles que benzoate d'estradiol, benzestrol et cortisones,

5) des agents filtrants solaires,

6) des colorants insolubles, tels que colorants connus sous les dénominations commerciales FDC, jaune n° 11, orange n° 17 et rouge, tels que n° 7, 8, 9 et 17.

Le brevet US—4 146 499 révèle une variété d'agents tensio-actifs anioniques, cationiques, non-ioniques ou amphotères qui peuvent être utilisés comme agents tensio-actifs de base pour former une microémulsion. La présente invention requiert que l'agent tensio-actif de base porte une charge à son extrémité hydrophile, ce qui exclut l'utilisation de certaines substances non-ioniques. Toutefois, ceci ne nécessite pas que l'agent tensio-actif de base soit totalement de caractère ionique. Certains des agents tensio-actifs de base préférés dans la présente invention sont les oxydes d'amines et le sulfate d'oxyde éthylène. Les oxydes d'amines sont non-ioniques; toutefois, il y a une séparation de charge à l'intérieur de la structure moléculaire, telle que la partie d'oxyde d'amine porte une charge positive, qui réagira avec un agent tensio-actif secondaire chargé négativement pour la mise en oeuvre de l'invention. Des oxydes d'amines convenables pour utilisation dans l'invention comprennent l'oxyde de cétyldiméthylamine, l'oxyde de myristyldiméthylamine, la décylaminobétaïne, de même que les oxydes mixtes d'alkyldiméthylamine contenant de 12 à 18 atomes de carbone dans le groupe alkyle. Des agents tensio-actifs de base primaires ioniques peuvent, bien entendu, être utilisés.

A titre d'exemples, des agents tensio-actifs de base ioniques convenables sont choisis parmi les savons d'acide gras, les sulfates d'alkyle ou d'aralkyle à longue chaîne, le sulfate d'oxyde d'éthylène et des sulfonates ayant de 12 à 20 atomes de carbone dans le groupe alkyle. D'autres agents tensio-actifs de base mentionnés dans le brevet US—4 146 499 sont également susceptibles d'être utilisés. Comme décrit dans le brevet US—4 146 499, l'agent tensio-actif de base peut être sélectionné en fonction des phases huileuse et aqueuse, de telle sorte que l'équilibre hydrophile-lipophile de l'agent tensio-actif produise une fine émulsion lactescente.

Si la formulation contient un agent oxydant, tel qu'un hypochlorite ou de l'eau oxygénée, tous les agents tensio-actifs de base, co-agent et secondaire doivent être choisis pour être non oxydables et exempts de toute impureté fournissant un agent oxydant. Un oxyde d'amine, des alcools tertiaires, et des sulfates d'éthers à longue chaîne ont été jugés convenables pour les formules contenant des agents de blanchiment ou du peroxyde.

Le co-agent tensio-actif, tel que décrit dans le brevet US—4 146 199, est une substance amphotère ayant un équilibre hydrophilelipophile plus élevé que l'agent tensio-actif de base. Le groupe comprend, non seulement des agents de surface actifs traditionnels solubles dans l'eau, mais aussi des alcools à chaîne courte, tels que le pentanol et l'hexanol. En pratique, un alcool à chaîne courte, de $C_4$ à $C_8$ constitue un mode de réalisation préféré. Dans la mesure où un agent oxydant est présent, le co-agent tensio-actif est, de préférence, un alcool tertiaire, tel que l'alcool t-amylique.

Les agents tensio-actifs secondaires entrant dans le champ de la présente invention ont, de façon caractéristique, au moins 8 atomes de carbone dans la partie lipophile avec une extrémité chargée par une partie hydrophile, tels que les oxydes d'amine, carboxylates, sulfonates ou sulfates. La partie lipophile des agents tensio-actifs secondaires satisfaisants peut comprendre des groupes aryle, tels que des composés alkylaryle ayant des maillons similaires. Les liaisons éthers peuvent être également présentes, tel que dans les sulfates d'alcool-oxyde d'éthylène.

D'autres agents tensio-actifs convenant pour l'invention pourront être choisis dans le domaine de la chimie des composés tensio-actifs. En général, les agents tensio-actifs secondaires peuvent être choisis parmi la même classe générale de produit que celle dans laquelle est sélectionné l'agent tensio-actif de base. Toutefois, ils seront sélectionnés de façon à avoir un groupe hydrophile chargé à l'opposé du groupe hydrophile de l'agent tensio-actif de base. Si la formule contient un agent oxydant, tel que de l'hypochlorite ou du peroxyde d'oxygène, tous les agents tensio-actifs de base, et secondaires et les co-agents tensio-actifs devront être choisis, afin de ne pas être oxydables et d'être exempts d'impuretés qui pourraient fournir un agent oxydant. L'oxyde d'amine, les alcools tertiaires et les sulfates d'éthers à longue chaîne ont été jugés satisfaisants pour les formules contenant un agent de blanchiment ou des peroxydes.

Comme indiqué précédemment, la présente invention met en oeuvre l'adsorption de l'agent tensio-actif secondaire à la surface de gouttelettes formant une micro-émulsion en raison de l'attraction électrostatique entre les agents tensio-actifs secondaire et de base. Toutefois, il a été trouvé que, si la réactivité entre l'agent tensio-actif de base et l'agent tensio-actif secondaire est trop grande, les deux agents se neutraliseront l'un et l'autre et détruiront la micro-émulsion souhaitée. Pour cette raison, les agents tensio-actifs de base et secondaire ne devront pas être tous les deux des réactifs fortement ioniques. Par exemple, un agent tensio-actif constitué par un composé ammonium quaternaire (fortement cationique) ne produira pas les résultats souhaités avec un agent tensio-actif constitué par un alkyle ou sulfonate (fortement anionique). Des meilleurs résultats sont obtenus lorsque l'un ou les deux agents tensio-actifs sont chargés modérément. Par exemple, un agent tensio-actif de base constitué par un oxyde d'amine (modérément cationique) peut être utilisé en combinaison avec un agent tensio-actif secondaire constitué par un sulfate ou sulfonate (fortement anionique), ou inversement.

Outre l'augmentation de la viscosité comme indiqué ci-dessus, d'autres produits peuvent être introduits qui augmenteront la viscosité de la phase aqueuse. Par exemple, des oxydes d'amines peuvent être combinés avec des sulfates ou sulfonates gras dans la phase continue (aqueuse), qui réagiront l'un avec l'autre pour former un réseau en forme de treillis entourant les gouttelettes de la micro-émulsion, ce qui augmentera la viscosité de la phase aqueuse. Dans certains cas, il peut être souhaitable ou avantageux de combiner une augmentation de la viscosité, conformément à la présente invention (c'est-à-dire en utilisant des agents tensio-actifs de base et secondaires), avec une augmentation de viscosité additionnelle procurée par incorporation d'agents qui provoqueront l'épaississement de la phase continue.

Des micro-émulsions, conformément à l'invention, peuvent être appliquées à différents domaines. Des exemples d'applications consistent notamment dans des produits nettoyants pour surfaces dures, des shampooings, des lotions, des crèmes, des applications cosmétiques ou médicinales, des cires pour carrosserie de voitures, des produits de nettoyage pour vitres, des produits anti-rouille, et des produits nettoyants pour les sols. Une autre application de l'invention concerne la récupération d'huile tertiaire. Jusqu'à présent, il est connu, pour la récupération d'huile tertiaire, d'inoder la surface d'huile avec un agent tensio-actif puis avec une solution polymère à haute viscosité qui va forcer le passage des agents tensio-actifs à travers l'huile sans écoulement sur celle-ci. Une micro-émulsion, conforme à la présente invention, peut être utilisée pour fournir le détergent requis pour modifier les caractéristiques de surface à l'intérieur des sables renfermant de l'huile dans une composition ayant une viscosité qui permet d'éviter un écoulement. De ce fait, il est inutile de faire suivre l'aspersion de l'agent tensio-actif par une seconde solution polymère.

La présente invention sera bien comprise à l'aide des exemples suivants:

Exemple 1

20 cm³ de kéroséne, 40 cm³ d'une solution à 30% d'oxyde de myristyldiméthylamine et 100 cm³ d'une solution à 2,5% d'hypochlorite de sodium sont mélangés et agités pour former une émulsion lactescente. L'émulsion est titrée avec 19,8 cm³ d'alcool t-amylique qui convertit l'émulsion lactescente en micro-émulsion. La micro-émulsion a une viscosité de 10 mPa · s et un taux de transmission de 96%.

On ajoute ensuite 15 cm³ d'une solution de condensat alcool gras oxyde d'éthylène sulfate de sodium connu sous la dénomination commerciale Genapol ZRO. On pense que le produit du commerce est à base d'un alcool en $C_{12}$—$C_{14}$ pour contenir 2—3 unités d'oxyde d'éthylène. La préparation est une solution aqueuse à 28%. Cette addition se traduit par une augmentation de la viscosité de la micro-émulsion précédente à 32 mPa · s. L'addition de 44 autres cm³ de solution de Genapol ZRO augmente la viscosité jusqu'à 225 mPa · s. Les deux micro-émulsions sont limpides et stables.

Exemple 2

40 cm³ kérosène, 60 cm³ de Genapol ZRO (tel que défini dans l'exemple 1) et 100 cm³ d'une solution à 5% d'hypochlorite de sodium sont mélangés et agités pour former une émulsion lactescente, qui est titrée avec 18,3 cm³ d'alcool t-amylique pour former une microémulsion. La micro-émulsion est une solution limpide ayant un taux de transmission de 96% et une viscosité de 95 mPa · s.

L'addition d'oxyde de myristyldiméthylamine (en solution à 30%) augmente la viscosité de la micro-émulsion à une valeur de 450 mPa · s. Dans la mesure où cette même solution est titrée avec une solution à 30% d'oxyde de cétyldiméthylamine, la viscosité de la micro-émulsion est amenée à 250 mPa · s.

Exemple 3

1000 cm³ d'une solution à 5,25% d'hypochlorite de sodium, 80 cm³ d'oxyde de miristyldiméthylamine (à 30%), 30 cm³ de kérosène et 130 cm³ d'une solution à 5% de tétrapyrophosphate de potassium sont mélangés et agités pour former une émulsion lactescente. L'addition de 47,6 cm³ d'alcool t-amylique produit une micro-émulsion. La micro-émulsion est une solution limpide ayant un taux de transmission de 88%, une viscosité de 5 mPa · s et un pH de 11,9. A 100 cm³ de cette micro-émulsion sont ajoutés 2 grammes de dodécylsulfate de sodium. Cela augmente la viscosité de la micro-émulsion à 220 mPa · s et la transforme en une solution opaque blanche.

A un autre échantillon de 100 cm³ de la même micro-émulsion sont ajoutés 2 grammes de dodécylsulfate de sodium et 2 grammes de carbonate de calcium. Dans un autre essai encore, 2 grammes de dodécylsulfate de sodium et grammes d'argile sont ajoutés à cette microémulsion. Dans les deux cas sont obtenues des émulsions stables de haute viscosité contenant le carbonate de sodium ou l'argile selon le cas en suspension stable.

En augmentant la quantité de dodécylsulfate de sodium ajouté à la micro-émulsion définie au début de cet exemple jusqu'à une valeur de l'ordre de 6 grammes pour 100 cm³ d'émulsion, la viscosité de la micro-émulsion peut être augmentée jusqu'à environ 450 mPa · s.

Il est avantageux d'ajouter l'agent tensio-actif secondaire à la micro-émulsion limpide dans un délai très bref après la formation de celle-ci. Pour illustrer cela, d'autres échantillons de la micro-émulsion ont été conservés pendant 24 heures. A 100 cm³ d'un tel échantillon ont été ajoutés 2 à 7 grammes de dodécylsulfate de sodium. S'il est procédé à l'addition de 2 grammes de dodécylsulfate de sodium juste après formation de l'émulsion, il en résulte une augmentation de viscosité pouvant atteindre environ 220 mPa · s. Si, au contraire, la micro-émulsion est formée depuis 24 heures lors de l'addition de dodécylsulfate de sodium, la viscosité augmente seulement jusqu'à 100 mPa · s environ. La viscosité maximale obtenue par addition de 7 grammes de dodécylsulfate de sodium à 100 cm³ d'une micro-émulsion réalisée 24 heures auparavant, est de l'ordre de 150 mPa · s.

Exemple 4

200 grammes de tripolyphosphate de potassium dissous dans 1 litre d'eau sont mélangés à 1 litre d'une solution à 5,25% d'hypochlorite de sodium et 200 cm³ d'une solution à 30% d'un mélange d'oxyde de miristyldiméthylamine et d'oxyde de cétyldiméthylamine. Le pH est ajusté à 11,9 à l'aide d'hydroxyde de potassium, avant addition de 100 cm³ de kérosène. Le mélange est agité pour former une émulsion lactescente, puis titré avec 98,5 cm³ d'alcool t-amylique pour former une micro-émulsion ayant une viscosité de 2,5 mPa · s.

A des échantillons de 100 cm³ de cette micro-

émulsion ont été ajoutées différentes quantités de Genapol ZRO et 2 grammes de carbonate de calcium:

| Genapol (grammes) | Viscosité de la micro-émulsion obtenue mPa · s |
|---|---|
| 10 | 40,5 |
| 20 | 96,5 |
| 25 | 290 |
| 30 | 675 |
| 40 | 1105 |

Ces micro-émulsions ont été laissées au repos dans le but de déterminer avec quelle rapidité le carbonate de calcium est séparé. Lorsque 10 à 20 grammes de Genapol ZRO sont ajoutés, la suspension de carbonate de calcium est séparée en 1 heure. Lorsque 25 grammes de Genapol ZRO ont été ajoutés, augmentant la viscosité de la micro-émulsion à 290 mPa · s, une nuit est nécessaire pour obtenir la séparation de la suspension de carbonate de calcium. Lorsque 30 grammes de Genapol ZRO sont ajoutés, fournissant une micro-émulsion d'une viscosité de 675 mPa · s, la suspension demeure stable pendant au moins une semaine à température ambiante. L'échantillon auquel 40 grammes de Genapol ZRO ont été ajoutés, possèdant une viscosité de 1105 mPa · s a été testé à 40°C en ce qui concerne sa stabilité. Dans ces conditions, la suspension de carbonate de calcium demeure stable pendant une durée d'une semaine.

La micro-émulsion peut être épaissie à l'aide de mélange d'agents tensio-actifs secondaires, si cela est souhaité. A titre d'exemple, il est possible de se référer à la micro-émulsion précédente partiellement épaissie, contenant 10 grammes de Genapol ZRO pâteux (à 68% d'activité), afin d'obtenir une viscosité de 40,5 mPa · s. A des échantillons de 100 cm³ de cette micro-émulsion ont été ajoutées différentes quantités de dodécylsulfate de sodium.

| Quantité de dodécylsulfate de sodium | Viscosité obtenue |
|---|---|
| 1 | 75,82 |
| 2 | 152,164 |
| 3 | 225,220 |
| 4 | 345,352 |
| 5 | 440 |

Les différentes valeurs de viscosité obtenues pour les mêmes conditions expérimentales résultent de plusieurs essais effectués successivement.

Exemple 5

50 cm³ d'oxyde de miristyldiméthylamine en solution à 30%, 25 cm³ de kérosène et 100 cm³ d'hypochlorite de sodium (en solution à 2,5%) sont mélangés et agités pour former une émulsion lactescente qui est ensuite titrée par 9,6 cm³ d'alcool t-amylique pour obtenir une micro-émulsion. Lorsque 50 cm³ de cette micro-émulsion sont mélangés à 5 cm³ d'une solution à 60% de miristylsulfonate de sodium, il est obtenu une micro-émulsion dont la viscosité est supérieure.

Lorsque 50 cm³ de la micro-émulsion de base de cet exemple sont mélangés avec 2 grammes de dodécylsulfate de sodium, la micro-émulsion se transforme en un gel opaque ayant une visco-sité de $7,6 \times 10^6$ mPa · s.

Exemple 6

1 cm³ d'hexadécane (90%) est mélangé à 100 cm³ d'eau et 2,5 cm³ de produit connu sous la dénomination commerciale d'Ammonyx CETAC en solution à 25% (chlorure de cétyltriméthylam-monium) et agité, afin de former une émulsion lactescente. Le mélange est titré avec 1,5 cm³ de 1-pentanol pour obtenir une micro-émulsion ayant un taux de transmission de 97% à 490 nm.

Cette micro-émulsion limpide est titrée avec 7 cm³ de dodécylsulfate de sodium 0,25 M. Cette opération augmente la viscosité de la micro-émulsion à 45 mPa · s.

Exemple 7

7,5 cm³ de toluène sont mélangés à 100 cm³ d'eau et 20 cm³ d'une solution à 30% d'oxyde de lauryldiméthylamine; le mélange est agité pour former une émulsion lactescente puis titré avec 5,2 ml d'alcool t-amylique. La micro-émulsion en résultant a une viscosité de 10 mPa · s et un taux de transmission de 95%.

Lorsque 100 cm³ de cette micro-émulsion sont combinés à 10 grammes de Genapol ZRO (pâte 68%) et 5,5 grammes de dodécylsulfate de sodium, la viscosité de la micro-émulsion est portée à 57 mPa · s. L'addition à la micro-émulsion partiellement épaissie de 5 cm³ d'oxyde de miristyldiméthylamine augmente encore la viscosité jusqu'à environ 470 mPa · s.

Exemple 8

100 cm³ d'eau, 50 cm³ d'une solution à 30% d'oxyde de lauryldiméthylamine sont mélangés et agités pour former une émulsion lactescente. Cette émulsion est titrée avec 41 cm³ d'alcool t-amylique, la micro-émulsion en résultant ayant une faible viscosité et un taux de transmission de 90%.

A un échantillon de 100 cm³ de cette micro-émulsion sont ajoutés 6 grammes de Genapol ZRO et 3 grammes de dodécylsulfate de sodium. La viscosité de la micro-émulsion est ainsi portée à 120 mPa · s.

A un autre échantillon de 100 cm³ d'émulsion sont ajoutés 5 grammes d'oxyde de miristyldiméthylamine et 3 grammes de dodécylsulfate de sodium réalisant une augmentation de la viscosité de la micro-émulsion jusqu'à 275 mPa · s.

A un troisième échantillon de 100 cm³ de la micro-émulsion sont ajoutés 10 grammes d'une solution à 60% de miristylsulfonate de sodium, 10 grammes d'oxyde de miristyldiméthylamine et 5 grammes de Genapol ZRO, la micro-émulsion en résultant étant limpide et ayant une viscosité de 728 mPa · s.

Exemple 9

100 cm³ d'eau, 3,5 cm³ de dodécane, 10 cm³ de peroxyde d'hydrogène à 30% et 20 grammes de myristylsulfate de sodium oxyéthyléné connu sous ls dénomination commerciale Standepol ES-40 sont combinés pour former une émulsion lactescente. Le mélange est titré avec 16,6 cm³ d'alcool t-amylique pour former une micro-émulsion puis le pH est ajusté à 4,5. A cette micro-émulsion sont ensuite ajoutés 15 grammes de Genapol ZRO pâteux, 20 grammes d'oxyde de diméthylmiristylamine et 10 grammes de chlorure de sodium. Le mélange est agité pour dissoudre les particules solides. Une micro-émulsion limpide de viscosité augmentée est obtenue. Le mélange final a une viscosité de 250 mPa · s mesurée dans un viscosimètre "Hercules" à 60 tours/minute.

**Revendications**

1. Micro-émulsion visqueuse d'huile dans l'eau, caractérisée en ce qu'elle comprend:
   1) une phase aqueuse continue,
   2) une phase huileuse non miscible avec la phase aqueuse dans laquelle elle est dispersée,
   3) un agent tensio-actif de base, qui est un composé ayant une partie lipophile et une partie chargée hydrophile, dont la fonction est de disperser la phase huileuse en fines gouttelettes de moins de 0,5 µm,
   4) un co-agent tensio-actif ayant un équilibre hydrophile/lipophile supérieur à l'agent tensio-actif de base, dont la fonction est de former une dispersion limpide, et
   5) un agent tensio-actif secondaire à longue chaîne ayant une partie lipophile et dont la fonction est d'augmenter la viscosité de la micro-émulsion, l'agent tensio-actif secondaire possèdant une partie lipophile à chaîne longue ayant au moins 8 atomes de carbone, et une partie chargée hydrophile apte à réagir avec la partie chargée hydrophile de l'agent tensio-actif de base.

2. Micro-émulsion selon la revendication 1, caractérisée en ce que l'agent tensio-actif de base est un oxyde d'amine gras apte à disperser la phase huileuse, tandis que l'agent tensio-actif secondaire est un agent tensio-actif anionique.

3. Micro-émulsion selon la revendication 1, caractérisée en ce que l'agent tensio-actif de base est un agent tensio-actif anionique apte à disperser la phase huileuse, tandis que l'agent tensio-actif secondaire est un oxyde d'amine gras.

4. Micro-émulsion selon l'une quelconque des revendications 1 à 3, caractérisée en ce que le co-agent tensio-actif est un alcool en $C_4$—$C_8$.

5. Micro-émulsion selon la revendication 4, caractérisée en ce que l'émulsion contient un agent oxydant et en ce que les agents tensio-actifs de base et secondaire et le co-agent tensio-actif sont non oxydables.

6. Micro-émulsion selon la revendication 5, caractérisée en ce que l'agent oxydant est constitué par le peroxyde d'hydrogène ou un hypochlorite.

7. Procédé d'obtention d'une micro-émulsion visqueuse d'huile dans l'eau, caractérisé en ce qu'il consiste à réaliser une première micro-émulsion, par mélange et agitation d'une phase aqueuse continue, d'une phase huileuse qui est non miscible dans la phase aqueuse et dispersée dans celle-ci, d'un agent tensio-actif de base qui est un composé ayant une partie lipophile et une partie chargée hydrophile, dont la fonction est de disperser la phase huileuse en fines gouttelettes de moins de 0,5 µm et d'un co-agent tensio-actif ayant un équilibre hydrophile/lipophile supérieur à l'agent tensio-actif de base, dont la fonction est de former une dispersion limpide, puis à augmenter la viscosité de la micro-émulsion en ajoutant à celle-ci, après sa formation, un agent tensio-actif secondaire possèdant une partie lipophile à chaîne longue ayant au moins 8 atomes de carbone, et une partie chargée hydrophile apte à réagir avec la partie chargée hydrophile de l'agent tensio-actif de base.

**Patentansprüche**

1. Viskosemikro-Emulsion von Öl in Wasser, dadurch gekennzeichnet, daß sie beinhaltet:
   1) eine kontinuierliche wässerige Phase,
   2) eine ölige Phase, die mit der wässerigen Phase, in der sie dispergiert ist, nicht mischbar ist,
   3) einen grenzflächenaktiven, basischen Wirkstoff, der so zusammengesetzt ist, daß er einen lipophilen Anteil und einen hydrophil durchsetzten Anteil hat, dessen Funktion es ist, die ölige Phase in feine Tröpfchen von mindestens 0,5 µm zu dispergieren,
   4) einen grenzflächenaktiven Co-Wirkstoff, der ein Hydrophil-Lipophil-Gleichgewicht höher als der grenzflächenaktive basische Wirkstoff hat und dessen Funktion es ist, eine klare Dispersion zu bilden, und
   5) einen langkettigen sekundären grenzflächenaktiven Wirkstoff, der einen lipophilen Anteil hat und dessen Funktion es ist, die Viskosität der Mikro-Emulsion zu erhöhen, wobei der sekundäre grenzflächenaktive Wirkstoff einen langkettigen lipophilen Anteil besitzt, der mindestens acht Kohlenstoffatome hat, und einen hydrophil durchsetzten Anteil, der in der Lage ist, mit dem hydrophil durchsetzten Anteil des basischen grenzflächenaktiven Wirkstoffes zu reagieren.

2. Mikro-Emulsion nach Anspruch 1, dadurch gekennzeichnet, daß der grenzflächenaktive basische Wirkstoff ein fettes Aminoxyd ist, das die ölige Phase dispergieren kann, während der grenzflächenaktive sekundäre Wirkstoff ein anionischer grenzflächenaktiver Wirkstoff ist.

3. Mikro-Emulsion nach Anspruch 1, dadurch gekennzeichnet, daß der grenzflächenaktive basische Wirkstoff ein anionischer grenzflächenaktiver Wirkstoff ist, der die ölige Phase dispergieren kann, während der sekundäre grenzflächenaktive Wirkstoff ein fettes Aminoxyd ist.

4. Mikro-Emulsion nach einem der Ansprüche 1 bis 3, dadurch gekennzeichnet, daß der grenzflächenaktive Co-Wirkstoff ein C₄ bis C₈-Alkohol ist.

5. Mikro-Emulsion nach Anspruch 4, dadurch gekennzeichnet, daß die Emulsion einen oxydierenden Wirkstoff enthält und daß die basischen grenzflächenaktiven Wirkstoffe und der grenzflächenaktive Co-Wirkstoff nicht oxydierbar sind.

6. Mikro-Emulsion nach Anspruch 5, dadurch gekennzeichnet, daß der oxydierende Wirkstoff durch Wasserstoffperoxyd oder ein Hypochlorit gebildet ist.

7. Verfahren zur Darstellung einer viskosen Mikro-Emulsion von Öl in Wasser, dadurch gekennzeichnet, daß eine erste Mikro-Emulsion gebildet wird durch Mischen und Agitieren einer kontinuierlichen wässerigen Phase, einer öligen Phase, die in der wässerigen Phase nicht mischbar und in dieser dispergiert ist, eines basischen grenzflächenaktiven Wirkstoffes, der eine Zusammensetzung ist mit einem lipophilen Teil und einem hydrophil durchsetzten Teil, dessen Funktion es ist, die ölige Phase in feine Tröpfchen von mindestens 0,5 µm zu dispergieren, sowie eines grenzflächenaktiven Co-Wirkstoffes mit einem Hydrophil-Lipophil-Gleichgewicht größer als der basische grenzflächenaktive Wirkstoff, dessen Funktion es ist, eine klare Dispersion zu bilden, wobei dann die Viskosität der Mikro-Emulsion dadurch erhöht wird, daß man ihr nach ihrer Bildung einen sekundären grenzflächenaktiven Wirkstoff zusetzt, der einen lipophilen langkettigen Anteil mit mindestens acht Kohlenstoffatomen sowie einen hydrophil durchsetzten Anteil besitzt, der in der Lage ist, mit dem hydrophil durchsetzten Anteil des basischen grenzflächenaktiven Wirkstoffes zu reagieren.

**Claims**

1. A viscous micro-emulsion of oil in water, characterised in that it comprises:
   1) a continuous aqueous phase,
   2) an oily phase which is not miscible with the aqueous phase in which it is dispersed,
   3) a surface active base agent which is a compound having a lipophilic part and a charged hydrophilic part, of which the function is to disperse the oily phase in fine droplets of at least 0.5 µm,
   4) a surface active co-agent having a hydrophilic/lipophilic equilibrium superior to the surface active base agent, of which the function is to form a clear dispersion, and
   5) a long chain secondary surface active agent having a lipophilic part and of which the function is to increase the viscosity of the micro-emulsion, the secondary surface active agent having a long chain lipophilic part with at least 8 carbon atoms, and a charged hydrophilic part adapted to react with the charged hydrophilic part of the surface active base agent.

2. A micro-emulsion according to Claim 1, characterised in that the surface active base agent is an oxide of a fatty amine adapted to disperse the oily phase, whilst the secondary surface active agent is an anionic surface active agent.

3. A micro-emulsion according to Claim 1, characterised in that the surface active base agent is an anionic surface active agent adapted to disperse the oily phase, whilst the secondary surface active agent is an oxide of a fatty amine.

4. A micro-emulsion according to any one of Claims 1 to 3, characterised in that the surface active co-agent is a C₄—C₈ alcohol.

5. A micro-emulsion according to Claim 4, characterised in that the emulsion contains an oxidising agent and in that the base and secondary surface active agents and the surface active co-agent are non-oxidisable.

6. A micro-emulsion according to Claim 5 characterised in that the oxidising agent is constituted by hydrogen peroxide or a hypochlorite.

7. A method of obtaining a viscose micro-emulsion of oil in water, characterised in that it consists of forming a first micro-emulsion by mixture and agitation of a continuous aqueous phase, an oily phase which is not miscible in the aqueous phase and dispersed in the latter, a surface active base agent which is a compound having a lipophilic part and a charged hydrophilic part, of which the function is to disperse the oily phase into fine droplets of at least 0.5 µm and a surface active co-agent having a hydrophilic/lipophilic equilibrium greater than the surface active base agent, of which the function is to form a clear dispersion, subsequently to increase the viscosity of the micro-emulsion by adding to the latter, after its formation, a secondary surface active agent having a long chain lipophilic part with at least 8 carbon atoms and a charged hydrophilic part adapted to react with the charged hydrophilic part of the surface active base agent.